# EUROPÄISCHE PATENTSCHRIFT

(11) **EP 2 291 874 B1**
(45) Veröffentlichungstag und Bekanntmachung des Hinweises auf die Patenterteilung: **04.01.2012**
(21) Anmeldenummer: 09772093.2
(22) Anmeldetag: 18.06.2009
(51) Int. Cl.: H01M 2/10, H01M 6/50, H01M 10/50

(54) **RUNDZELLENAKKUMULATOR**
ROUND CELL BATTERY
ACCUMULATEUR À PILES RONDES

(30) Priorität: 03.07.2008 DE 102008031175
(43) Veröffentlichungstag der Anmeldung: 09.03.2011
(73) Patentinhaber: Johnson Controls Hybrid and Recycling GmbH, 30419 Hannover (DE)
(72) Erfinder: JOSWIG, Ralf, 29690 Buchholz (Aller) (DE); BRENNER, Helge, 30451 Hannover (DE)
(74) Vertreter: Günther, Constantin
(86) Internationale Anmeldenummer: PCT/EP2009/004412
(87) Internationale Veröffentlichungsnummer: WO 2010/000393

(56) Entgegenhaltungen:
- EP-A- 1 990 849
- WO-A-2006/124663
- WO-A-2009/040200
- WO-A-2009/056224
- DE-A1-102004 043 829

## Beschreibung

Die Erfindung betrifft einen Rundzellenakkumulator.

Aus der EP 0 917 230 B1 und der WO2006/124663 sind Akkumulatorenbatterien mit einer Temperiervorrichtung bekannt

Die DE 102 23 782 B4 offenbart eine Batterie mit wenigstens einer elektrochemischen Speicherzelle und einer Kühleinrichtung, die von einem flüssigen Kühlmedium durchströmt ist. Die Speicherzellen werden in Öffnungen der Kühleinrichtungen aufgenommen und stehen mit jeweils eine in einer Richtung senkrecht zu der Längsachse der Speicherzelle gekrümmten Außenfläche teilweise in kraftschlüssigem Kontakt. In den Bereichen des kraftschlüssigen Kontaktes ist eine Dehnfuge vorgesehen.

DE 10 2007 009 315 A1 offenbart eine Vorrichtung zur Kühlung elektrischer Elemente mit Leiterkörpern, die zur Ableitung von Wärme mit Seitenflächen der elektrischen Elemente im thermischen Kontakt stehen.

Bei einem elektrischen Akkumulator mit Rundzellen besteht das Problem der Wärmeableitung. Dieses Problem wird dadurch verschärft, dass der Becher der Zelle auf elektrischem Potential liegt.

Aufgabe der vorliegenden Erfindung ist es daher, einen verbesserten Rundzellenakkumulator zu schaffen.

Die Aufgabe wird durch einen Rundzellenakkumulator mit den Merkmalen von Anspruch 1 gelöst.

Vorteilhafte Weiterbildungen des Rundzellenakkumulators sind in den Unteransprüchen angegeben.

Die erfindungsgemäß ausgebildeten und angeordneten Ableitaufnahmeelemente erfüllen mehrere Funktionen:
Erstens stellt das thermoplastische Elastomer die elektrische Isolierung zwischen den Rundzellen und den Ableitelementen sicher, die beispielsweise aus Kupfer, Aluminium oder Stahl hergestellt sind und ein geeignetes Kältemittel führen. Als Ableitelemente eignen sich besonders Strangpressteile. Geeignete Kältemittel sind beispielsweise Tetrafluorethan (R134a) und Kohlendioxid (R744).

Zweitens leitet das thermoplastische Elastomer die Wärme aus den Rundzellen zu den Ableitelementen, die die Wärme auf das Kältemittel übertragen. Eine gute Wärmeleitung wird erhalten, wenn das thermoplastische Elastomer eine Wärmeleitfähigkeit größer als einen Watt pro Meter und Kelvin (also > 1 W/(mK)) aufweist. Vorzugsweise ist die Wärmeleitfähigkeit größer als zwei bis drei Watt pro Meter und Kelvin (also > 3 W/(mK)). Geeignete thermoplastische Elastomere werden von der Firma Cool Polymers, Inc., USA, unter den Bezeichnungen CoolPoly^{®} D8102 Thermally Conductive Thermoplastics Elastomer (TPE) und Cool-Poly^{®} D8104 Thermally Conductive Thermoplastics Elastomer (TPE) angeboten.

Drittens gewährleistet das thermoplastische Elastomer durch seine gummielastische Eigenschaft einen guten Kontakt zwischen den Rundzellen und den Ableitelementen. Luftspalte, die die Wärmeleitung von den Rundzellen zu dem Kältemittel beeinträchtigen, werden wirksam vermieden. Insbesondere wird durch ein Anpressen der Rundzellen bei der Herstellung des Rundzellenakkumulators an die Ableitelemente sichergestellt, dass die Wärmeübergangsflächen optimal aufeinander liegen und Luftspalte vermieden werden. Thermoplastische Elastomere mit einer Shore A-Härte von 20 bis 100 haben in nicht-öffentlichen Versuchen gute Ergebnisse gezeigt.

In einer Ausführungsform sind schlauchförmige Überzieher aus einem elektrisch isolierenden, wärmeleitfähigen und gummielastischen thermoplastischen Elastomer vorgesehen, die über die Rundzellen gezogen sind. An den Außenseiten der Überzieher können Ableitaufnahmeelemente angeordnet sein. Vorzugsweise sind sechs Ableitaufnahmeelemente an jedem Überzieher einer innenliegenden Rundzelle vorgesehen, die gleichmäßig an der Außenseite angeordnet sind, also in 60°-Abständen. Eine innenliegende Rundzelle ist parallel zu ihrer Längsachse vollständig von anderen Rundzellen umgeben, sie liegt also nicht am Rand des Rundzellenakkumulators. Die Überzieher können aus demselben Material wie die Ableitaufnahmeelemente gebildet sein. In diesem Fall sind die Überzieher und Ableitaufnahmeelemente zweckmäßig einstückig ausgebildet.

In einer weiteren Ausführungsform sind die Rundzellen in mindestens einem für eine Gruppe von Rundzellen gemeinsame Ableitaufnahmeelement aufgenommen, die eine an die Seitenwand-Oberflächen der Rundzellen angepasste Aufnahmekontur haben, so dass diese Seitenwand-Oberflächen an der Innenwandung eines zugeordneten Ableitaufnahmeelementes anliegen, wobei die Ableitaufnahmeelemente weiterhin eine Aufnahmebohrung zur Aufnahme der stabförmigen Ableitelemente haben. Vorzugsweise weisen die Ableitaufnahmeelemente in Längsrichtung dreieckige Querschnitte mit konkaven Seiten auf. Die Ableitaufnahmeelemente dienen in diesem Fall zugleich als Abstandshalter zwischen den Rundzellen. Ein guter Wärmeübergang zwischen den Rundzellen und den Ableitaufnahmeelementen wird erreicht, wenn die an die Rundzellen angrenzenden Innenwandungen der Ableitaufnahmeelemente gekrümmt sind. Vorteilhaft weisen die Ableitaufnahmeelemente Einschnitte auf, die radial von der Aufnahmebohrung aus in das Ableitaufnahmeelement hineinragen. Die Einschnitte verbessern den Kontakt zwischen den Rundzellen und den Ableitaufnahmeelemente einerseits sowie den Ableitaufnahmeelementen und den Ableitelementen andererseits beim Herstellen des Rundzellenakkumulators. Zudem erleichtern die Einschnitte das Zusammenfügen der einzelnen Komponenten und damit die Herstellung des Rundzellenakkumulators.

Die Erfindung wird nachfolgend anhand der beigefügten Zeichnungen näher beschrieben.

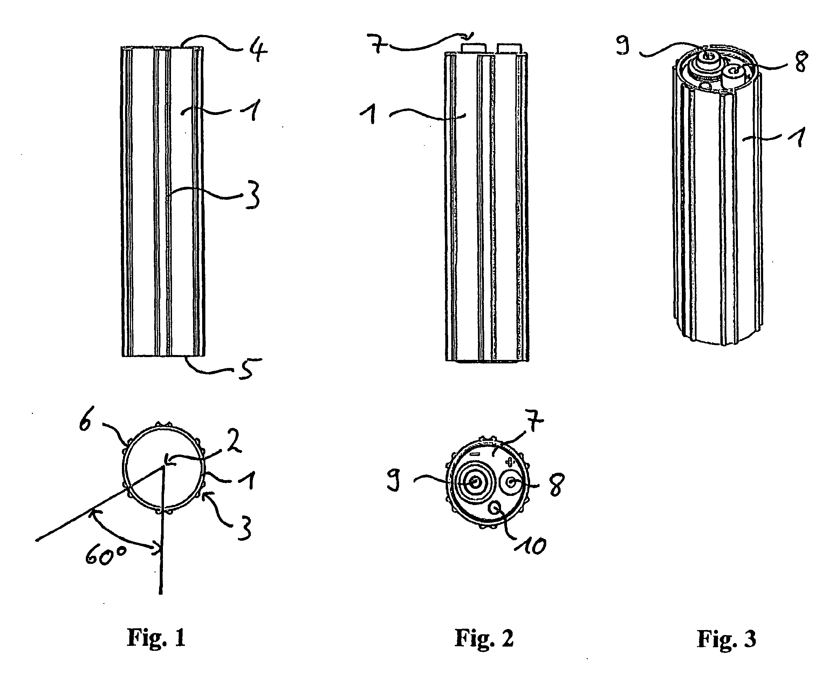

Figur 1 zeigt einen schlauchförmigen Überzieher 1 aus einem thermoplastischen Elastomer, das elektrisch isolierend, gut wärmeleitend und (gummi-)elastisch ist. Im oberen Ausschnitt der Figur 1 ist eine Seitenansicht und im unteren Ausschnitt eine Draufsicht dargestellt.

Der Überzieher 1 hat im Wesentlichen die Mantelform eines Kreiszylinders. Eine Längsachse 2 fällt mit der Zylinderachse zusammen.

An der Außenfläche des Überziehers 1 sind sechs Ableitaufnahmeelemente 3 angeordnet. Die Ableitaufnahmeelemente 3 sind in gleichmäßigen Abständen zueinander angeordnet, also in Winkelabständen von sechzig Grad.

Die Ableitaufnahmeelemente 3 sind stabförmig ausgebildet und erstrecken sich von einer Oberseite 4 bis zu einer Unterseite 5.

Die Ableitaufnahmeelemente 3 weisen gekrümmte Ausnehmungen 6 mit kreisbogenförmigem Querschnitt auf. Diese Ausnehmungen 6 dienen als Führungen für (in Figur 1 nicht dargestellte) Ableitelemente mit kreiszylinderförmigen Querschnitten.

Figur 2 zeigt den Überzieher 1 aus Figur 1, der über eine Rundzelle 7 gezogen ist.

Die Rundzelle 7 ist in bekannter Weise ausgebildet, weist insbesondere eine positive Elektrode 8 und eine negative Elektrode 9 auf. Zu erkennen ist auch ein Entgasungsventil 10.

Aufgrund der Gummielastizität des Überziehers 1 sitzt der Überzieher 1 fest auf der Rundzelle 7.

Figur 3 zeigt eine perspektivische Ansicht der Situation aus Figur 2.

Figuren 4 und 5 zeigen eine Mehrzahl von zu einem Stapel 11 angeordneten Rundzellen 7. Figur 4 zeigt eine Teilansicht in Richtung IV.

Der Stapel 11 weist drei Reihen 12 mit je fünf Rundzellen 7 auf. Die Reihen 12 sind abwechselnd um einen halben Durchmesser der Rundzellen 7 senkrecht zu der Längsrichtung 2 der Rundzellen 7 zueinander versetzt angeordnet. Diese Anordnung ermöglicht eine dichte Packung der Rundzellen. Der Stapel 11 ist nicht vollständig. Er umfasst nur einen Teil aller Rundzellen 7 eines Rundzellenakkumulators.

Die Rundzellen 7 weisen jeweils einen Überzieher 1 auf. An der Außenseite der Überzieher 1 sind gleichmäßig jeweils sechs Ableitaufnahmeelemente 3 angeordnet. Dies ist sinnvoll, da bei dieser Packung der Rundzellen 7 jede Rundzelle 7 sechs direkte benachbarte Rundzellen 7 hat. Dies gilt jedenfalls für Rundzellen 7, die nicht am Rand des Rundzellenakkumulators liegen (innere Rundzelle). Beispielsweise ist Rundzelle 13 eine innere Rundzelle 7.

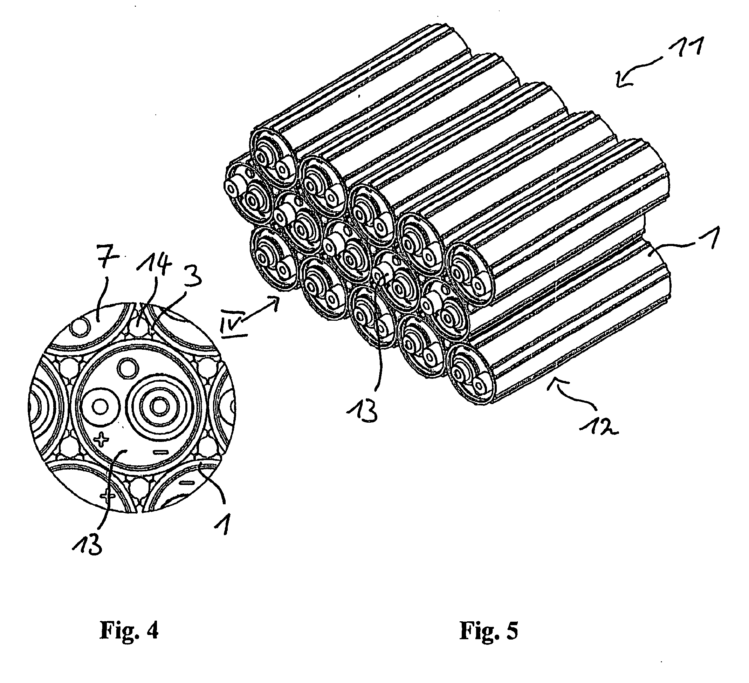

Figur 4 zeigt Ableitelemente 14. Die Ableitelemente 14 werden jeweils von drei Ableitaufnahmeelementen 3 geführt, wobei jedes dieser drei Ableitaufnahmeelemente 3 einer anderen Rundzelle 7 zugeordnet ist. Die Ableitelemente 14 haben einen kreisförmigen Querschnitt. Es ist zu erkennen, dass sich zwei benachbarte Rundzellen 7 nicht direkt berühren, sondern immer durch zwei Überzieher 1 voneinander getrennt sind, insbesondere elektrisch isoliert.

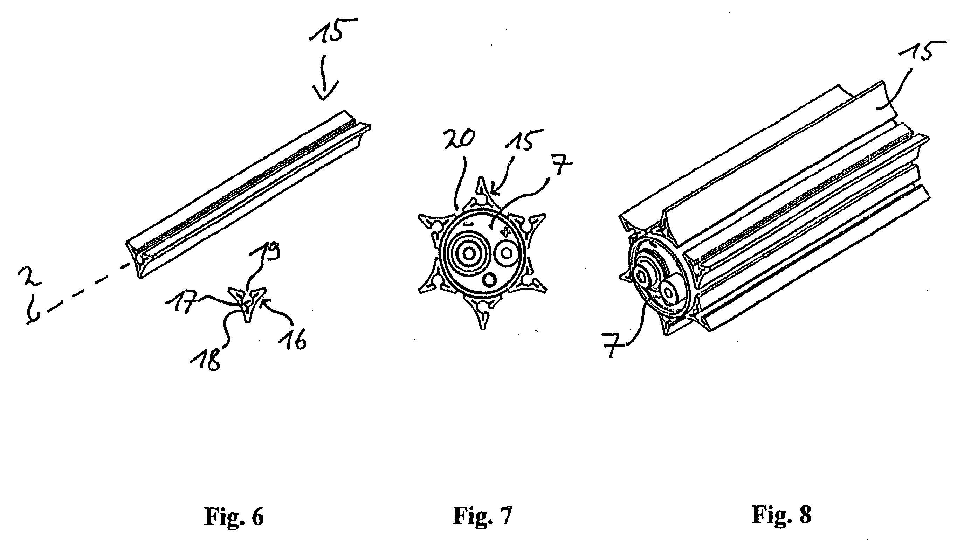

Figur 6 zeigt eine alternative Ausführungsform eines Ableitaufnahmeelementes 15.

Das Ableitaufnahmeelement 15 ist stabförmig ausgeführt. Es weist eine Länge auf, die etwa der Länge der Rundzellen 7 entspricht.

Das Ableitaufnahmeelement 15 hat einen dreieckigen Querschnitt senkrecht zu der Längsachse 2 (also betrachtet in Richtung der Längsachse); dies ist im unteren Ausschnitt der Figur 6 zu erkennen.

Das Ableitaufnahmeelement 15 hat eine an die Seitenwand-Oberflächen der Rundzellen 7 angepasste Aufnahmekontur 16, die drei Kreisbögen umfasst.

Zentral ist eine Aufnahmebohrung 17 als Führung für ein Ableitelement 14 mit kreisförmigem Querschnitt vorgesehen. Drei Einschnitte 18 ragen radial von der Aufnahmebohrung 17 aus in das Ableitaufnahmeelement 15 hinein. Ferner ist ein Schlitz 19 in der Aufnahmekontur 16 vorgesehen. Über den Schlitz 19 lässt sich zum einen das Ableitelement 14 in die Führung einbringen. Zum anderen werden störende Luftschlitze beim Verpressen des Rundzellenakkumulators vermieden. Der Schlitz 19 dient also auch als Dehnungsfuge beim Verpressen.

Figur 7 zeigt die Rundzelle 7, um deren Umfang angrenzend an die Seitenwand-Oberfläche sechs Ableitaufnahmeelemente 15 gleichmäßig angeordnet sind. Die Ableitaufnahmeelemente 15 berühren sich nicht gegenseitig; dies ist an Spalten 20 zu erkennen.

Figur 8 zeigt eine perspektivische Ansicht der Figur 7.

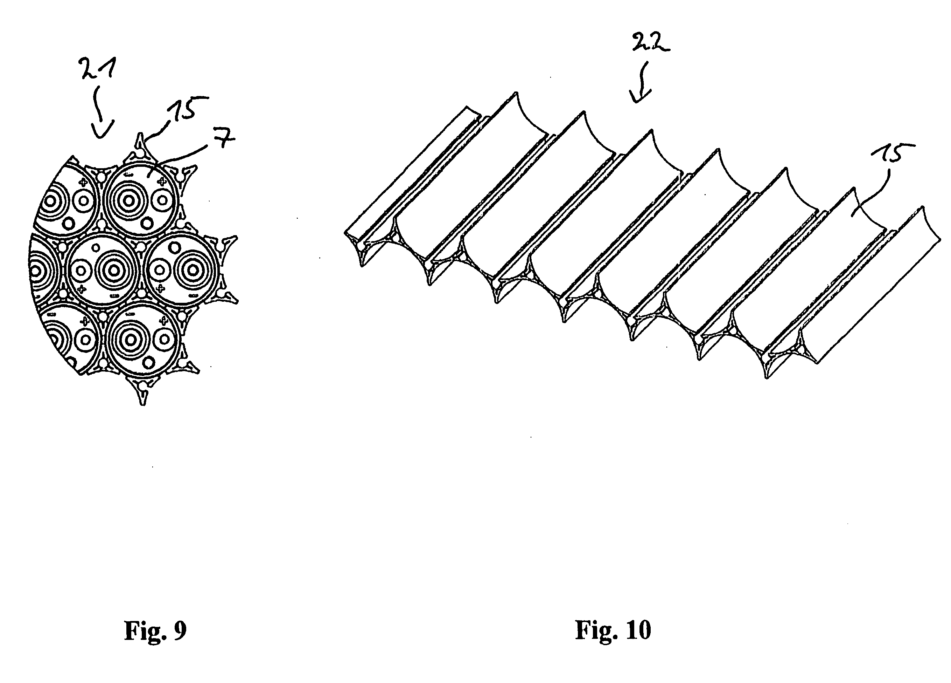

Figur 9 zeigt einen Teilschnitt eines Stapels 21 der Rundzellen 7 mit den Ableitaufnahmeelementen 15. Es ist zu erkennen, dass sich die Rundzellen 7 aufgrund der Anordnung der Ableitaufnahmeelemente 15 nicht gegenseitig berühren. Da die Ableitaufnahmeelemente 15 aus elektrisch isolierendem thermoplastischen Elastomer hergestellt sind, sind die Rundzellen 7 elektrisch voneinander isoliert. Die Ableitaufnahmeelemente 15 sind untereinander nicht verbunden.

Figur 10 zeigt eine Zwischenlage 22, die aus Ableitaufnahmeelementen 15 gebildet ist. Die Zwischenlage 22 besteht aus einer Aneinanderreihung von Ableitaufnahmeelementen 15. Jeweils zwei benachbarte Ableitaufnahmeelemente 15 sind miteinander verbunden. Die Zwischenlage 22 wird bei der Herstellung des Rundzellenakkumulators zwischen zwei benachbarte Reihen 12 von Rundzellen 7 gelegt. Die Zwischenlage 22 bietet den Vorteil einer einfachen Herstellung des Rundzellenakkumulators.

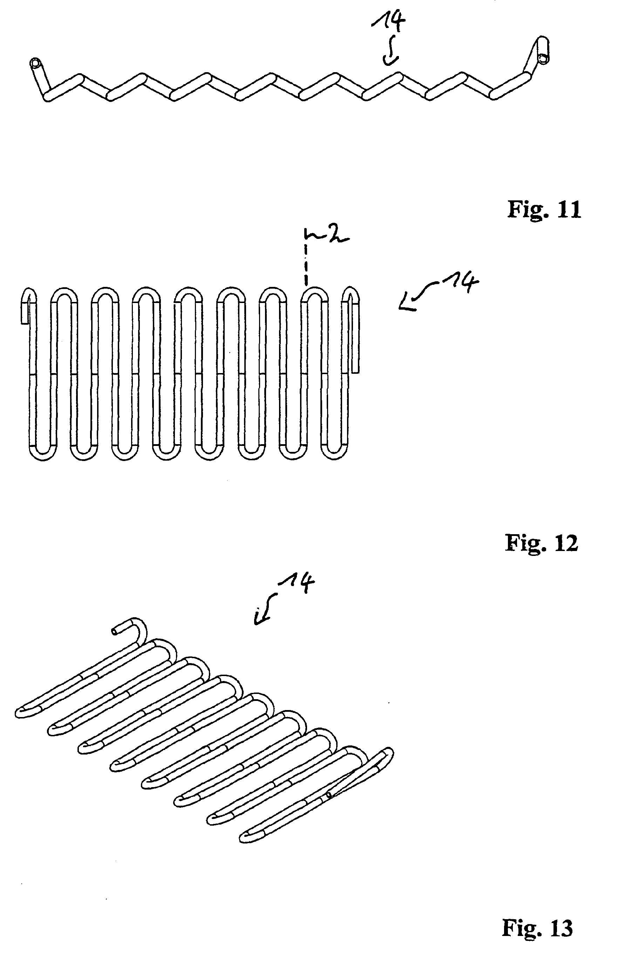

Figur 11 zeigt das Ableitelement 14 in Draufsicht, das heißt in Richtung der Längsachse 2.

Figur 12 zeigt das Ableitelement 14 aus Figur 11 in Seitenansicht, das heißt senkrecht zu der Längsachse 2.

Figur 13 zeigt das Ableitelement 14 aus den Figuren 11 und 12 in einer perspektivischen Ansicht.

Die Figuren 11, 12 und 13 lassen erkennen, dass das Ableitelement 14 zick-zack-förmig in drei Dimensionen verläuft, eine gedachte Achse des rohrförmigen Ableitelementes 14 also eine dreidimensionale schlangenförmige Kurve beschreibt.

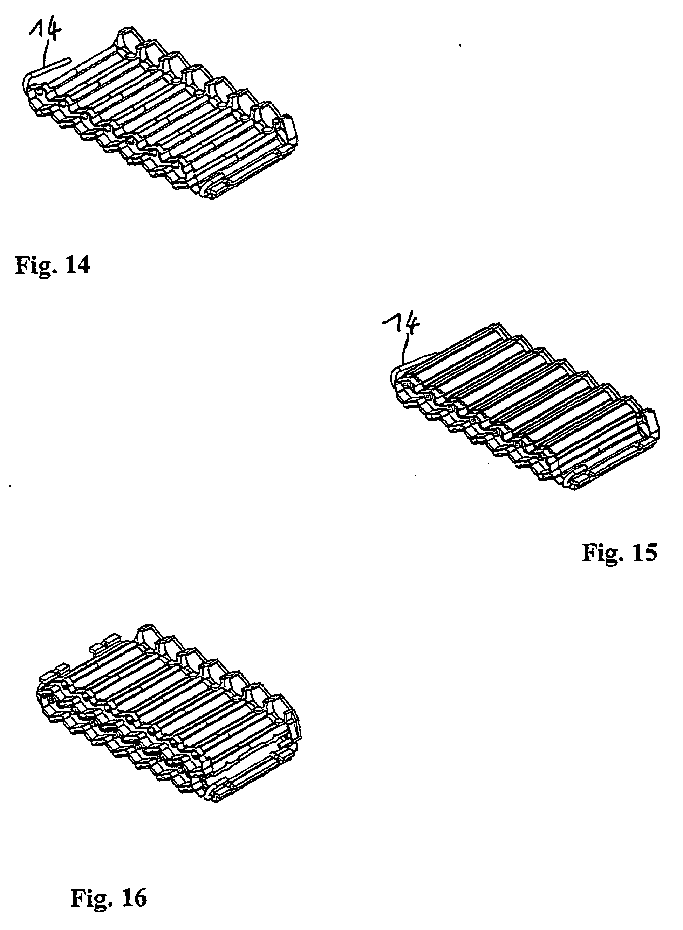

Figuren 14 bis 19 beschreiben einen Teil eines Montageprozesses des Rundzellenakkumulators.

Zunächst wird das Ableitelement 14 in ein Kunststoffteil 23 eingelegt (Figur 14).

Anschließend werden die mit dem Überzieher 1 und den Ableitaufnahmeelementen 3 versehenen Rundzellen 7 derart auf das Ableitelement 14 gelegt, dass das Ableitelement 14 in den Ausnehmungen 6 der Ableitaufnahmeelemente 3 geführt wird (Figur 15).

Die Vorgänge aus den Figuren 14 und 15 werden wiederholt bis ausreichend Reihen von Rundzellen 7 gebildet sind.

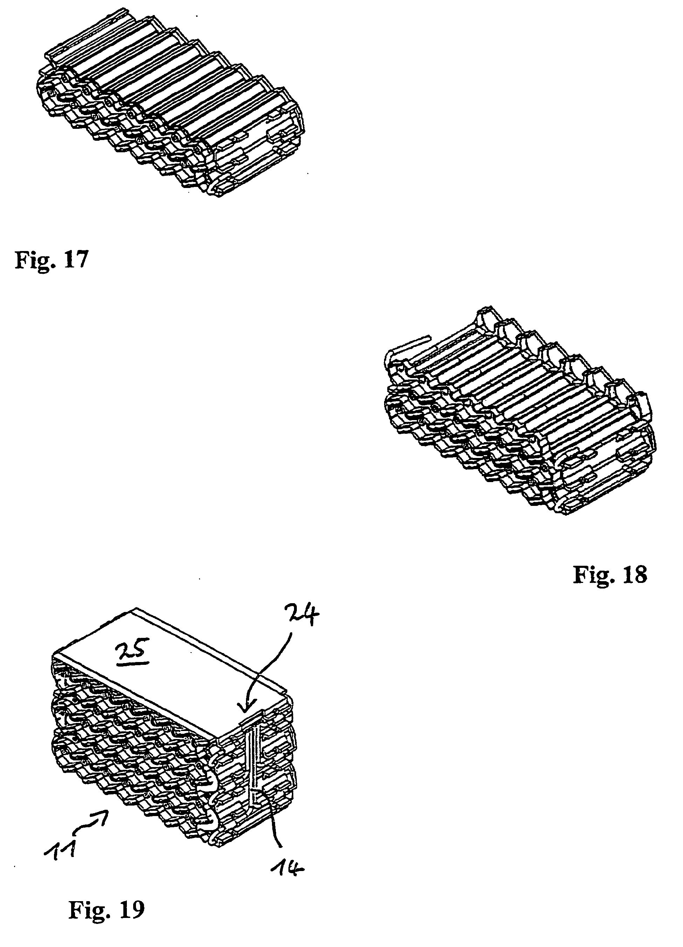

Figur 19 lässt erkennen, dass die einzelnen Ableitelemente 14 an einem Ende 24 des Stapels 11 zusammengeführt werden. Sie können mit einem nicht dargestellten Sammler verbunden werden.

Über zwei gegenüberliegende Abschlussplatten 25, von denen nur eine sichtbar ist, wird der Rundzellenakkumulator verpresst. So wird eine optimale Anlage der Komponenten zur Wärmeübertragung gewährleistet.

## Patentansprüche

1. Rundzellenakkumulator mit
a) einer Mehrzahl von nebeneinander angeordneten Rundzellen (7),
b) mindestens einem elektrisch gegenüber den Rundzellen (7) isoliertes Ableitelement (14), das stabförmig ausgeführt und so gebogen ist, dass es zick-zack-förmig abwechselnd jeweils entlang einer Unterseite (5), einer sich daran anschließenden Seitenwand und einer Oberseite (4) der Rundzellen (7) verläuft und zur Wärmeableitung eine Gruppe von Rundzellen (7) wärmeleitend verbindet, und
c) einem elektrisch isolierenden, wärmeleitfähigen und gummielastischen thermoplastischen Elastomer, das zumindest teilweise zwischen dem mindestens einen Ableitelement (14) und den Rundzellen (7) angeordnet ist, um die Ableitelemente (14) elektrisch von den Rundzellen (7) zu isolieren und Wärme von den Rundzellen (7) zu den Ableitelementen (14) abzuleiten.

2. Rundzellenakkumulator nach Anspruch 1, **gekennzeichnet durch** schlauchförmige Überzieher (1) aus elektrisch isolierenden, wärmeleitfähigen und gummielastischen thermoplastischen Elastomer, die über die Rundzellen (7) gezogen sind.

3. Rundzellenakkumulator nach Anspruch 2, **dadurch gekennzeichnet, dass** an den Außenseiten der Überzieher (1) Ableitaufnahmeelemente (15) angeordnet sind.

4. Rundzellenakkumulator nach einem der vorstehenden Ansprüche, **dadurch gekennzeichnet, dass** die Rundzellen (7) in mindestens ein für eine Gruppe von Rundzellen (7) gemeinsames Ableitaufnahmeelement (15) aus thermoplastischem Elastomer aufgenommen sind, die eine an die Seitenwand-Oberflächen der Rundzellen (7) angepasste Aufnahmekontur haben, so dass diese Seitenwand-Oberflächen an der Innenwandung eines zugeordneten Ableitaufnahmeelementes (15) anliegen, wobei die Ableitaufnahmeelemente (15) weiterhin Aufnahmebohrung Ableitaufnahmeelemente (15) weiterhin Aufnahmebohrung (17) zur Aufnahme der stabförmigen Ableitelemente haben.

5. Rundzellenakkumulator nach Anspruch 4, **dadurch gekennzeichnet, dass** die an die Rundzellen (7) angrenzenden Innenwandungen der Ableitaufnahmeelemente (15) gekrümmt sind.

6. Rundzellenakkumulator nach Anspruch 4 oder 5, **dadurch gekennzeichnet, dass** die Ableitaufnahmeelemente (15) Einschnitte (18) aufweisen, die radial von der Aufnahmebohrung (17) aus in das Ableitaufnahmeelement (15) hineinragen.

7. Rundzellenakkumulator nach einem der vorstehenden Ansprüche, **dadurch gekennzeichnet, dass** das thermoplastische Elastomer eine Wärmeleitfähigkeit größer als einen Watt pro Meter und Kelvin (> 1 W/(mK)) aufweist.

8. Rundzellenakkumulator nach einem der vorstehenden Ansprüche, **dadurch gekennzeichnet, dass** das thermoplastische Elastomer der Überzieher eine Shore A-Härte von 20 bis 100 aufweist.

## Claims

1. A round cell rechargeable battery with
a) a plurality of round cells (7) arranged next to one another,
b) at least one dissipation element (14), which is electrically insulated from the round cells (7), is in the form of a rod and is bent in such a way that it runs in zigzag fashion alternately in each case along a lower side (5), an adjoining side wall and an upper side (4) of the round cells (7) and connects a group of round cells (7) in thermally conductive fashion so as to dissipate heat, and
c) an electrically insulating, thermally conductive and rubber-elastic thermoplastic elastomer, which is arranged at least partially between the at least one dissipation element (14) and the round cells (7) in order to insulate the dissipation elements (14) electrically from the round cells (7) and to dissipate heat from the round cells (7) to the dissipation elements (14).

2. The round cell rechargeable battery as claimed in claim 1, **characterized by** jackets (1) in the form of flexible tubes consisting of electrically insulating, thermally conductive and rubber-elastic thermoplastic elastomer which are drawn over the round cells (7).

3. The round cell rechargeable battery as claimed in claim 2, **characterized in that** dissipation receptacle elements (15) are arranged on the outer sides of the jackets (1).

4. The round cell rechargeable battery as claimed in one of the preceding claims, **characterized in that** the round cells (7) are held in at least one dissipation receptacle element (15) consisting of thermoplastic elastomer which is common to a group of round cells (7), said dissipation receptacle elements having a receptacle contour which matches the side wall surfaces of the round cells (7), with the result that these side wall surfaces bear against the inner wall of an associated dissipation receptacle element (15), the dissipation receptacle elements (15) furthermore having a receiving bore dissipation reception elements (15) furthermore receiving bore (17) for receiving the rod-shaped dissipation elements.

5. The round cell rechargeable battery as claimed in claim 4, **characterized in that** those inner walls of the dissipation receptacle elements (15) which adjoin the round cells (7) are curved.

6. The round cell rechargeable battery as claimed in claim 4 or 5, **characterized in that** the dissipation receptacle elements (15) have notches (18), which protrude radially out of the receiving bore (17) into the dissipation receptacle element (15).

7. The round cell rechargeable battery as claimed in one of the preceding claims, **characterized in that** the thermoplastic elastomer has a thermal conductivity greater than one watt per Kelvin-meter (> 1 W/(mK)).

8. The round cell rechargeable battery as claimed in one of the preceding claims, **characterized in that** the thermoplastic elastomer of the jackets has a Shore A hardness of from 20 to 100.

## Revendications

1. Accumulateur à piles rondes comprenant :
a) un ensemble de piles rondes (7) juxtaposées,
b) au moins un élément évacuateur (14), isolé électriquement par rapport aux piles rondes (7), cet élément ayant une forme de tige et il est courbé pour passer en zigzag, alternativement chaque fois le long d'un côté inférieur (5) et de la paroi latérale adjacente et un côté supérieur (4) des piles rondes (7) pour relier en conduction thermique un groupe de piles rondes (7) pour évacuer la chaleur, et
c) un élastomère électriquement isolant, conducteur de chaleur, élastique comme du caoutchouc, thermoplastique, installé au moins en partie entre au moins un élément évacuateur (14) et les piles rondes (7) pour isoler électriquement les éléments évacuateurs (14) par rapport aux piles rondes (7) et pour évacuer de la chaleur des piles rondes (7) vers les éléments évacuateurs (14).

2. Accumulateur à piles rondes selon la revendication 1,
**caractérisé par**
des éléments de revêtement tubulaires (1) en un élastomère électriquement isolant, conducteur de chaleur, élastique comme du caoutchouc, thermoplastique, que l'on passe sur les piles rondes (7).

3. Accumulateur à piles rondes selon la revendication 2,
**caractérisé par**
des éléments de réception (15) d'éléments évacuateurs prévus sur le côté extérieur des manchons (1).

4. Accumulateur à piles rondes selon l'une des revendications précédentes,
**caractérisé en ce que**
les piles rondes (7) sont reçues dans au moins un élément de réception (15) commun à un groupe de piles rondes (7), cet élément étant en un élastomère thermoplastique, et il a un contour de réception adapté à la surface de la paroi latérale des piles rondes (7) de manière que les surfaces des parois latérales s'appliquent contre la paroi intérieure d'un élément récepteur (15) associé,
* les éléments récepteurs (15) comportant en outre en plus des perçages de réception (17) pour recevoir des éléments évacuateurs en forme de tige.

5. Accumulateur à piles rondes selon la revendication 4,
**caractérisé en ce que**
les parois intérieures des éléments récepteurs (15) adjacents aux piles rondes (7) sont courbés.

6. Accumulateur à piles rondes selon la revendication 4 ou 5,
**caractérisé en ce que**
les éléments récepteurs (15) comportent des encoches (18) qui pénètrent radialement à partir du perçage de réception (17), dans l'élément récepteur (15).

7. Accumulateur à piles rondes selon l'une des revendications précédentes,
**caractérisé en ce que**
l'élastomère thermoplastique a une conductivité thermique supérieure à un watt par mètre et par degré Kelvin (> 1 W/(mK)).

8. Accumulateur à piles rondes selon l'une des revendications précédentes,
**caractérisé en ce que**
l'élastomère thermoplastique des gaines a une dureté Shore A comprise entre 20 et 100.
